(19) Europäisches Patentamt
European Patent Office
Office européen des brevets

(11) EP 0 773 245 B1

(12) EUROPÄISCHE PATENTSCHRIFT

(45) Veröffentlichungstag und Bekanntmachung des Hinweises auf die Patenterteilung:
**31.01.2001 Patentblatt 2001/05**

(21) Anmeldenummer: **96117484.4**

(22) Anmeldetag: **31.10.1996**

(51) Int Cl.7: **C08F 236/10**, C08F 212/08, C09D 109/06, C09D 125/10, C09D 109/08, C08F 212/06, C08F 2/22

(54) **Verwendung einer wässrigen Polymerisatdispersion zur Herstellung von Wasserdampfsperren**

Use of aqueous polymer dispersions for preparing water vapor barriers

Utilisation de dispersions aqueuses de polymères pour préparer des barrières contre la vapeur d'eau

(84) Benannte Vertragsstaaten:
**AT BE CH DE DK ES FI FR GB GR IE IT LI NL PT SE**

(30) Priorität: **11.11.1995 DE 19542077**

(43) Veröffentlichungstag der Anmeldung:
**14.05.1997 Patentblatt 1997/20**

(73) Patentinhaber: **BASF AKTIENGESELLSCHAFT
67056 Ludwigshafen (DE)**

(72) Erfinder:
- **Schmidt-Thümmes, Jürgen, Dr.
67141 Neuhofen (DE)**
- **Wistuba, Eckehardt, Dr.
67098 Bad Dürkheim (DE)**
- **Dragon, Andree
67346 Speyer (DE)**
- **Anselmann, Thomas
76829 Landau (DE)**

(56) Entgegenhaltungen:
**FR-A- 2 342 992**
**GB-A- 737 158**
**US-A- 2 847 404**

EP 0 773 245 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Vorliegende Erfindung betrifft die Verwendung einer wäßrigen Polymerisatdispersion, deren in disperser Verteilung befindliches Polymerisat in radikalisch polymerisierter Form aus

| | |
|---|---|
| 20 bis 65 Gew.% | wenigstens eines vinylaromatischen Monomeren (Monomere A), |
| 35 bis 80 Gew.-% | wenigstens einer zwei konjugierte ethylenisch ungesättigte Doppelbindungen aufweisenden Monomeren (Monomere B) und |
| 0 bis 10 Gew.% | sonstigen wenigstens eine ethylenisch ungesättigten Doppelbindung aufweisenden Monomeren (Monomere C) |

aufgebaut ist und deren Gehalt an Alkalimetallionen, bezogen auf die Masse des dispergierten Polymerisats, ≤ 0,5 Gew.-% beträgt, zur Herstellung von Wasserdampfsperren. Außerdem betrifft vorliegende Erfindung die Herstellung einer solchen wäßrigen Polymerisatdispersion und die wäßrige Polymerisatdispersion selbst.

Luft enthält normalerweise eine bestimmte Wasserdampfmenge, die einen bestimmten Partialdruck ausübt. Diese Wasserdampfaufnahme der Luft ist begrenzt und hängt von der Temperatur ab. Mit steigender Temperatur nimmt das Wasserdampf-Aufnahmevermögen stark zu. Bei der größtmöglichen Dampfmenge ist der Partialdruck gleich dem Sättigungsdruck des Wassers bei derselben Temperatur. Das prozentuale Verhältnis der in der Luft vorhandenen Dampfmenge zur höchstmöglichen nennt man relative Luftfeuchtigkeit. Bei konstantem absoluten Feuchtigkeitsgehalt sinkt beim Erwärmen die relative Luftfeuchtigkeit und steigt umgekehrt beim Abkühlen an. Beim Unterschreiten der Taupunkttemperatur kondensiert die aber den Sättigungswert hinaus vorhandene Dampfmenge zu Tauwasser.

Trennt z.B. eine poröse Wand zwei Bereiche mit unterschiedlichen Partialdrucken von Luft und Wasserdampf, so wandern Wasserdampf bzw. Luftmoleküle durch diese Wand bis zum Konzentrations- bzw. Druckausgleich. Weist die Wand längs ihrer Dicke gleichzeitig einen Temperaturgradienten auf, kann es innerhalb der Wand zur Überschreitung des Sättigungsdrucks des Wassers und somit zu Tauwasserbildung kommen, das die Wand schädigt (z.B. Minderung ihrer wärmeisolierenden Wirkung, Ausbildung von Schimmelpilzen etc.). Vor diesem Hintergrund ist es z.B. wünschenswert, die Innenwände von Feuchträumen (als Feuchträume werden hier Räume bezeichnet, deren Atmosphäre relativ zur Atmosphäre ihrer Umgebung einen erhöhten Wasserdampfgehalt aufweist; Beispiele für Feuchträume sind Küchen, Baderäume, Molkereiräume, Industrieräume, Kellerräume) möglichst wasserdampfundurchläßig zu gestalten, d.h., mit einer Wasserdampfsperre zu versehen. Desgleichen gilt für die Außenwände von Räumen, deren Umgebungsatmosphäre einen relativ erhöhten Wasserdampfgehalt aufweist (z.B. die Außenwände von Kühlräumen). Ein weiteres Anwendungsgebiet für Wasserdampfsperren bilden Holzanstriche. Aufgrund seiner hygroskopischen Beschaffenheit schrumpft bzw. quillt Holz bei wechselnder relativer Luftfeuchtigkeit als Folge der dadurch bedingten Wasseraufnahme bzw. -abgabe, es "arbeitet", womit in der Regel Beschädigungen des Holzanstrichs einhergehen. Es ist daher wünschenswert, entweder die Holzoberfläche vor Aufbringung des eigentlichen Schutzanstrichs wasserdampfundurchlässig auszurüsten oder den Holzanstrich selbst wasserdampfundurchlässig zu gestalten.

Aus Römpps Chemie-Lexikon, Achte Auflage, 1981, Cm-G, Franck Verlag, Stuttgart S. 974 ist bekannt, daß die wäßrigen Diofan ®-Polymerisatdispersionen der BASF AG Verfilmungen mit hoher Wasserdampfdichtigkeit zu bilden vermögen. In entsprechender Weise empfehlen die Technischen Informationen TI/ED 1037 d, September 1993 u. TI/ED 1652 d, Mai 1993 der BASF AG die Verfilmungen von Diofan A 601 sowie von Diofan A 690 als Wasserdampfsperren sowohl für typische Wandoberflächenmaterialien wie Zementstriche, Beton, Gips, Gipskartonplatten, Preßholzspanplatten, Sperrholz, Hartfaserplatten und Mauerwerke als auch für Holz selbst.

Die Wasserdampfsperrwirkung kann dabei in einfacher Weise dadurch erzielt werden, daß man die jeweilige Oberfläche entweder mit der wäßrigen Polymerisatdispersion selbst oder mit einer geeigneten Masse beschichtet, die die wäßrige Polymerisatdispersion als Bindemittel enthält. Beim Abtrocknen der Beschichtung erfolgt die Ausbildung des die Sperrwirkung ausübenden Polymerisatfilmes.

Bemerkenswerterweise handelt es sich bei diesen Diofan-Marken um wäßrige Dispersionen von Copolymerisaten aus relativ polaren Monomeren (Vinylidenchlorid und n-Butylacrylat), was ausweist, daß die Frage der Wasserdampfdurchlässigkeit einer Polymerisatverfilmung von der Frage der Polarität des zugrunde liegenden Polymerisats entkoppelt zu betrachten ist.

Eine weitere bemerkenswerte Eigenschaft der genannten Diofane ist, daß sie bei den häufigsten Anwendungstemperaturen (5 bis 35°C) Verfilmungen mit erhöhter Elastizität zu bilden vermögen. Dies ist insofern von Bedeutung, als die wasserdampfdicht auszurüstenden Untergründe in der Regel Risse aufweisen, deren Ausdehnung bei Temperaturänderungen Schwankungen unterworfen ist. Aufgrund ihrer erhöhten Elastizität vermögen die Diofanverfilmungen diesen Schwankungen ohne Eigenrißbildung (Rißstellen eröffnen Wasserdampfdurchtritt) in vorteilhafter Weise zu folgen und so eine dauerhafte Wasserdampfsperre zu bilden.

Bemerkenswerterweise vermögen die Diofane das vorgenannte Eigenschaftsprofil auch auf Beschichtungsmassen zu übertragen, die neben dem Diofan bis zu 60 % ihres Feststoffgesamtvolumens an feinteiligen mineralischen Materialien wie Füllstoffe und Pigmente zugesetzt enthalten (während Füllstoffe und Pigmente üblicherweise an Hand ihrer unterschiedlichen Feinteiligkeit sowie ihres verschiedenen Brechungsindex begrifflich gegeneinander abgegrenzt werden, soll der Begriff Pigment hier als beide umfassend verwendet werden; in entsprechender Weise bildet vorgenannter Volumenanteil die Pigmentvolumenkonzentration (PVK)). Dies eröffnet die Möglichkeit die Wasserdampfsperren optisch ansprechend sowie in einfacher Weise mit variabler Schichtdicke zu erzeugen.
Auch vermögen die Diofanverfilmungen in hervorragender Weise auf den als mögliche Wandoberflächenmaterialen genannten Materialen zu haften.
Nachteilig an den Diofanen ist jedoch, daß das in ihnen in polymerisierter Form enthaltene Vinylidenchlorid als Funktion der Zeit unter Einwirkung des wäßrigen Dispergiermediums einer fortschreitenden Hydrolyse unter Ausbildung von Chlorwasserstoff unterworfen ist. Letzterer ist unerwünscht und beeinträchtigt u.a. die Lagerstabilität, Verdickbarkeit und Formulierbarkeit entsprechender Beschichtungszubereitungen (z.B. wird als Pigment enthaltenes feinteiliges $CaCO_3$ durch die Chlorwasserstoffentwicklung angegriffen).
Aufgabe der vorliegenden Erfindung war daher, wäßrige Polymerisatdispersionen für eine Verwendung zur Herstellung von Wasserdampfsperren zur Verfügung zu stellen, die das beschriebene vorteilhafte Eigenschaftsprofil der Diofane einerseits in sich vereinen, andererseits jedoch die beschriebenen Nachteile der Diofane nicht aufweisen.
Demgemäß wurde gefunden, daß sich wäßrige Polymerisatdispersionen, deren in disperser Verteilung befindliches Polymerisat in radikalisch polymerisierter Form aus

| | |
|---|---|
| 20 bis 65 Gew.-% | wenigstens eines vinylaromatischen Monomeren (Monomere A), |
| 35 bis 80 Gew.-% | wenigstens eines zwei konjugierte ethylenisch ungesättigte Doppelbindungen aufweisenden Monomeren (Monomere B) und |
| 0,5 bis 10 Gew.-% | sonstigen Monomeren, ausgewählt aus der Gruppe umfassend 3 bis 6 C-atome aufweisende α,β-monoethylenisch zugesättigte Mono- und Dicarbonsäuren und deren Amide (Monomere C) |

aufgebaut ist (bezogen auf die insgesamt einpolymerisiert enthaltene Menge an Monomeren A-C) und deren Gehalt an Alkalimetallionen, bezogen auf die Masse des dispergierten Polymerisats und nachfolgend in einfacher Weise GA genannt, ≤ 0,5 Gew.-% beträgt, in der geforderten Weise zur Herstellung von Wasserdampfsperren eignen.
Erfindungsgemäß geeignete Monomere A sind u.a. Styrol und die Vinyltoluole (Methylstyrol). Vorzugsweise wird Styrol eingesetzt. Erfindungsgemäß geeignete Monomere B sind u.a. Butadien, 2-Methyl-butadien (Isopren) und das 2,3-Dimethyl-butadien.
Als Monomere C eignen sich u.a. Vinylester von 1 bis 3 C-Atomen aufweisenden Alkancarbonsäuren, Ester der Methacrylsäure oder Acrylsäure mit 1 bis 8 C-Atome aufweisenden Alkanolen, 3 bis 6 C-Atome aufweisende α,β-monoethylenisch ungesättigte Mono- und Dicarbonsäuren, die Amide und Nitrile dieser Carbonsäuren, aber auch Olefine wie Ethylen. D.h. mögliche Monomere C sind z.B. Vinylformiat, Vinylacetat, Vinylpropionat, Acrylsäure, Methacrylsäure, Itaconsäure, Maleinsäure, Acrylamid, Methacrylamid, Acrylnitril, Methacrylnitril, Methylacrylat, Ethylacrylat, n-Butylacrylat, tert.-Butylacrylat, iso-Butylacrylat, 2-Ethylhexylacrylat und die entsprechenden Methacrylate.
D.h., die erfindungsgemäß zu verwendenden wäßrigen Polymerisatdispersionen umfassen Ausführungsformen, deren in disperser Verteilung befindliche Polymerisatteilchen 40 bis 60 Gew.-% Monomere A (z.B. Styrol) und 40 bis 60 Gew.-% Monomere B (z.B. Butadien) einpolymerisiert enthalten. In erfindungsgemäßer Weise können vorgenannte Gewichtsanteile aber auch 50 bis 60 Gew.-% (Monomere A) und 40 bis 50 Gew.-% (Monomere B) betragen. Die Menge der in den dispers verteilten Polymerisaten einpolymerisiert enthaltenen Monomeren C beträgt häufig lediglich bis zu 5 oder bis zu 3 bzw. bis zu 2 Gew.-%. Die Menge an in den dispers verteilten Polymerisaten einpolymerisiert enthaltenen Monomeren C beträgt wenigstens 0,5 Gew.-%.
Die Monomeren C werden ausgewahlt aus der Gruppe umfassend 3 bis 6 C-Atome aufweisende α,β-monoethylenisch ungesättigte Mono- und Dicarbonsäuren und deren Amide. Häufig umfaßt diese Gruppe Acrylsäure, Methacrylsäure, Itaconsäure, Acrylamid und Methacrylamid. Bewährt hat sich ein Gemisch aus 3 bis 6 C-Atome aufweisenden α,β-monoethylenisch ungesättigten Carbonsäuren und deren Amiden als Monomere C. Ein solches Gemisch kann beispielsweise aus Acrylsäure und Acrylamid oder aus Acrylsäure, Itaconsäure und Acrylamid zusammengesetzt sein.
Der z-mittlere Polymerisatteilchendurchmesser $\bar{d}_z$ der erfindungsgemäß einzusetzenden wäßrigen Polymerisatdispersionen beträgt in der Regel ≥ 100 nm bis ≤ 250 nm, häufig auch ≥ 140 nm bis ≤ 200 nm, und läßt sich nach der Methode der quasielastischen Lichtstreuung ermitteln. Der pH-Wert des wäßrigen Dispergiermediums (bezogen auf 25°C u. 1 atm) der erfindungsgemäß zu verwendenden wäßrigen Polymerisatdispersionen beträgt vorzugsweise ≥ 6 (Glaselektrode). Günstig ist der pH-Bereich 6 bis 10, insbesondere die Bereiche 7 bis 10 und der Bereich 8 bis 9. Der Vorzug dieser pH-Bereiche ist u.a. darin zu sehen, daß sie einerseits eine erhöhte Stabilität der dispersen Verteilung der Polymerisatpartikel selbst als auch andererseits eine erhöhte Stabilität der homogenen Verteilung gegebenenfalls mitzuverwendender feinteiliger Pigmente ermöglichen.

Erfindungsgemäß wesentlich ist, daß der Gehalt der erfindungsgemäß zu verwendenden wäßrigen Polymerisatdispersionen an Alkalimetallionen, bezogen auf die Masse des dispergierten Polymerisats, ≤ 0,5 Gew.-% beträgt. Je geringer dieser GA-Wert der erfindungsgemäß einzusetzenden wäßrigen Polymerisatdispersionen ist, desto höher ist in überraschender Weise die resultierende Wasserdampfsperrwirkung ihrer Verfilmungen. D.h. erfindungsgemäß zuläßige GA-Werte können ≤ 0,4 Gew.-%, ≤ 0,3 Gew.-%, ≤ 0,2 Gew.-%, ≤ 0,1 Gew.-%, ≤ 0,05 Gew.-% und vorzugsweise 0 Gew.-% betragen. Es ist erfindungsgemäß nicht von Nachteil, wenn entsprechende Gehaltsbeschränkungen bezüglich des Beiseins von Erdalkalimetallionen sowie sonstiger Metallionen eingehalten werden.

Die Herstellung der erfindungsgemäß zu verwendenden wäßrigen Polymerisatdispersionen aus ihren Ausgangsmonomeren A-C kann in an sich bekannter Weise nach der Methode der radikalischen wäßrigen Emulsionspolymerisation, d.h. unter Zusatz von radikalischem Polymerisationsinitiator, Dispergiermittel sowie gegebenenfalls das Molekulargewicht regelnden Substanzen erfolgen. In einfachster Weise werden dabei alle Ausgangssubstanzen unter Rühren ins Polymerisationsgefäß vorgelegt und anschließend die gewünschte Polymerisationstemperatur eingestellt. Die Zusammensetzung des Polymerisationsansatzes, insbesondere die Zusammensetzung der Monomeren A-C, wird dabei mit Vorteil so gewählt, daß die Glasübergangstemperatur Tg der Verfilmung der resultierenden wäßrigen Polymerisatdispersion (ermittelt mittels differential scanning calorimetry, 20°C/min., midpoint) -30 bis +15°C, häufig -10 bis +5°C beträgt. Der Zusammenhang zwischen Glasübergangstemperatur und Monomerenzusammensetzung ist dem Fachmann für statistische Copolymerisate und oberhalb von 50000 relativen Molekulargewichtseinheiten liegende Copolymerisatmolekulargewichte in guter Näherung durch die Beziehung nach Fox bekannt.

Nach Fox (F.G. Fox, Bull. Am. Phys. Soc. (Ser. II) 1, 123 [1956] und Ullmanns Encyclopädie der technischen Chemie, 4.Auflage, Bd. 19, 1980, VCH Chemie, S. 18 gilt für die Glasübergangstemperatur von Mischpolymerisaten in guter Näherung:

$$\frac{1}{T_g} = \frac{X^1}{T_g^{\ 1}} + \frac{X^2}{T_g^{\ 2}} + \dots\dots\ \frac{X^n}{T_g^{\ n}},$$

wobei $X^1$, $X^2$, ....., $X^n$ die Massenbrüche der Monomeren 1, 2, ....n und $T_g^1$, $T_g^2$, $T_g^n$ die Glasübergangstemperaturen der jeweils nur aus einem der Monomeren 1, 2 ....., n aufgebauten Polymerisate in Grad Kelvin bedeuten. Die Glasübergangstemperaturen dieser Homopolymerisate der vorgenannten Monomere sind bekannt und z.B. in J. Brandrup, E.H. Immergut, Polymer Handbook 1st Ed., J. Wiley, New York 1966, 2nd Ed., J. Wiley, New York 1975, und 3rd Ed., J. Wiley, New York, 1989 sowie Ullmann's Encyclopedia of Industrial Chemistry, VCH Chemie, Vol. A 21, 1992, S. 169, Table 8, aufgeführt.

Als radikalische Polymerisationsinitiatoren kommen zur Durchführung der radikalischen wäßrigen Emulsionspolymerisation vor allem im wäßrigen Medium in der erforderlichen Einsatzmenge lösliche Initiatoren in Betracht. Es kann sich dabei sowohl um Peroxide, Peroxodischwefelsäure und deren Salze, als auch um Azoverbindungen handeln. Vorzugsweise werden solche radikalischen Polymerisationsinitiatoren angewendet, die kein Alkalimetallelement bzw. überhaupt kein Metallelement umfassen. D.h. gegenüber Natriumperoxodisulfat wird erfindungsgemäß Ammoniumperoxodisulfat bevorzugt. Die Polymerisationstemperatur wird normalerweise dem verwendeten Initiatorsystem angepaßt. Sie kann 0 bis 130°C betragen. In Anwendung von Peroxodischwefelsäure oder deren Salzen beträgt sie in der Regel 70 bis 130°C, bevorzugt 75 bis 100°C. Der Arbeitsdruck kann bei der radikalischen wäßrigen Emulsionspolymerisation, der Polymerisationstemperatur und der Flüchtigkeit der zu polymerisierenden Monomeren angepaßt, 1 bis 10 atm und mehr betragen. Niedrige Polymerisationstemperaturen ermöglichen kombinierte Initiatorsysteme, die aus wenigstens einem Reduktionsmittel und wenigstens einem Peroxid und/oder Hydroperoxid zusammengesetzt sind, z. B. tert.-Butylhydroperoxid und Hydroxymethansulfinsäure oder deren Salze, oder Wasserstoffperoxid und Ascorbinsäure. Ganz besonders niedrige Polymerisationstemperaturen ermöglicht die Anwendung kombinierter Initiatorsysteme, die darüber hinaus eine geringe Menge einer im Polymerisationsmedium löslichen Metallverbindung, deren metallischen Komponente in mehreren Wertigkeitsstufen auftreten kann, enthalten. Als Beispiel sei die Kombination Ascorbinsäure/Eisen(II)sulfat/Wasserstoffperoxid angeführt. In der Regel werden, bezogen auf die Gesamtmenge der zu polymerisierenden Monomeren, 0,1 bis 3 Gew.-% an radikalischem Polymerisationsinitiator angewendet, wobei Peroxodischwefelsäure und ihre Salze bevorzugt verwendet werden.

Um die Stabilität der resultierenden wäßrigen Polymerisatdispersion zu gewährleisten werden im Rahmen der radikalischen wäßrigen Emulsionspolymerisation üblicherweise Dispergiermittel mitverwendet. Als solche kommen alle üblicherweise eingesetzten Dispergiermittel, d.h. sowohl Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie unterscheiden sich von den Schutzkolloiden ferner dadurch, daß sie im Wasser oberhalb der kritischen Micellbildungskonzentration zur Micellbildung befähigt sind.

Mitverwendete Emulgatoren können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Werden anionische Emulgatoren eingesetzt, so weisen diese vorzugsweise Ammoniumionen als Gegenion auf. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 2 bis 30, Alkylrest: $C_{10}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Beispielhaft genannt seien die Alkalimetall- bzw. Ammoniumsalze der Dodecylbenzolsulfonsäure sowie die Alkalimetall- bzw. Ammoniumsalze des Schwefelsäurehalbesters von ethoxyliertem Dodecanol (EO-Grad: 2 bis 4): Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel I

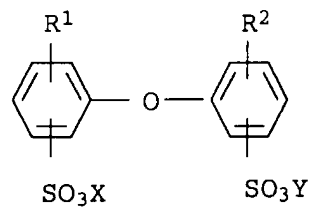

(I),

worin $R^1$ und $R^2$ Wasserstoff oder $C_4$-bis $C_{24}$-Alkyl bedeuten und nicht gleichzeitig Wasserstoff sind, und X und Y Alkalimetallionen und/oder Ammioniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Individuell genannt seien Verbindungen I in denen X und Y Natrium oder Ammonium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2 A1 (Warenzeichen der Dow Chemical Company).

In der Regel beträgt die Menge an eingesetztem Dispergiermittel 1 bis 3 Gew.-% bezogen auf die radikalisch zu polymerisierenden Monomeren. Erfindungsgemäß von Vorteil ist, daß zur Herstellung selbst der am bevorzugtesten zu verwendenden wäßrigen Polymerisatdispersionen in der Regel $\leq 2$, bzw. $\leq 1{,}5$ bzw. $\leq 1$ Gew.-% an Dispergiermittel (in entsprechender Weise wie vorstehend bezogen) ausreichend sind.

Zur Steuerung des Molekulargewichts des resultierenden Polymerisats wird üblicherweise im Beisein von das Molekulargewicht regelnden Substanzen wie Mercaptanen, z.B. n-Dodecylmercaptan o. tert.-Dodecylmercaptan, polymerisiert. Typischerweise betragen die Einsatzmengen an Molekulargewichtsregler, bezogen auf die Menge der zu polymerisierenden Monomeren, 0,1 bis 5, meist bis 2,5 Gew.-%.

In der Regel wird unter Inertgasatmosphäre polymerisiert. Großtechnisch erfolgt die Durchführung radikalischer wäßriger Emulsionspolymerisationen meistens in Eisen- oder Stahlkesseln. Um negative Auswirkungen geringster im Verlauf der Polymerisation in Lösung gehender Eisenspuren auszuschließen, setzt man dem Polymerisationsgemisch normalerweise Chelatbildner zu, die Eisenionen zu komplexieren vermögen. Als typischer Vertreter sei Trilon® B genannt (das Dinatriumsalz der Ethylendiaminessigsäure). Üblicherweise sind, bezogen auf die zu polymerisierenden Monomeren, unter 1 Gew.-% liegende Einsatzmengen an Chelatbildnern ausreichend.

Die großtechnische Durchführung der radikalischen wäßrigen Emulsionspolymerisation zur Herstellung der erfindungsgemäß zu verwendenden wäßrigen Polymerisatdispersionen erfolgt aus Gründen einer sicheren Abfuhr der Reaktionswärme zweckmäßigerweise nach der Methode der Monomerenzulauffahrweise. D.h., lediglich ein Teil des Polymerisationsansatzes wird ins Polymerisationsgefäß vorgelegt und insbesondere die überwiegende Menge der zu polymerisierenden Monomeren wird nach Maßgabe ihres Verbrauchs dem Polymerisationsgefäß kontinuierlich zugeführt. Vorzugsweise erfolgt die Monomerenzufuhr dabei in im wäßrigen Medium voremulgierter Weise. In der Regel wird die kontinuierliche Monomerenzufuhr von einer synchronen Initiatorzufuhr begleitet. Zur Verbesserung der Reproduzierbarkeit der mittleren Polymerisatteilchengröße umfaßt die Vorlage zweckmäßigerweise eine geringe Menge

einer sehr feinteiligen vorgebildeten wäßrigen Polymerisatdispersion (einen sogenannten Saatlatex). In typischer Weise beträgt der zahlenmittlere Polymerisatteilchendurchmesser $\bar{d}_n$ des im wesentlichen monodispersen Saatlatex 30 nm. Ferner ist es günstig, wenn es sich bei dem Saatlatex um eine Polystyrolsaat handelt. Aus Gründen einer erhöhten Stabilität der dispersen Verteilung der Saatlatexpartikel, umfaßt die Vorlage im Falle von cozupolymerisierenden $\alpha,\beta$-monoethylenisch ungesättigten Carbonsäuren in der Regel einen Teil derselben. Auch der Chelatbildner ist normalerweise Bestandteil der Vorlage. Wird Molekulargewichtsregler mitverwendet, ist dieser in der Regel Bestandteil der Monomerenzulauf.

Zur Entfernung von flüchtigen organischen Bestandteilen aus der resultierenden wäßrigen Polymerisatdispersion wird diese im Anschluß an das eigentliche Polymerisationsverfahren häufig sowohl chemisch als auch physikalisch desodoriert. Bei der chemischen Desodorierung wird der wäßrigen Polymerisatdispersion spezieller Polymerisationsinitiator (z.B das System tert.-Butylhydroperoxid/ Natriumdisulfit/Aceton) zugesetzt, der in besonders effektiver Weise unter den eigentlichen Polymerisationsbedingungen nicht einpolymerisierte Monomere (Restmonomere) zur Polymerisation initiert und in die Polymerisatketten chemisch einbindet. Nach Durchführung der chemischen Desodorierung wird zum Zweck der Beseitigung von nicht copolymerisierbaren flüchtigen organischen Bestandteilen meist noch mit Wasserdampf gestrippt (physikalische Desodorierung). Es sind so erfindungsgemäß zu verwendende wäßrige Polymerisatdispersionen erhältlich, deren Restgehalt an flüchtigen organischen Verbindungen < 100 ppm (bezogen auf die Masse der wäßrigen Polymerisatdispersion) beträgt. In der Regel werden nach-Beendigung der radikalischen wäßrigen Emulsionspolymerisation wäßrige Polymerisatdispersionen erhalten, deren wäßriges Dispergiermedium einen pH-Wert < 6 aufweist. Eine pH-Wert Erhöhung des wäßrigen Dispergiermediums wird mit Vorteil durch Zugabe von organischen Aminen und/oder Ammoniak bewirkt. Erfindungsgemäß weniger bevorzugt ist die Verwendung von Metallhydroxiden (z.B. Alkalimetallhydroxiden) zur pH-Erhöhung des wäßrigen Dispergiermediums. Meist erfolgt die Herstellung der erfindungsgemäß zu verwendenden wäßrigen Polymerisatdispersionen mit einem Feststoffanteil von 40 bis 70, vorzugsweise von 50 bis 60 Gew.-%.

Erfindungsgemäß günstig ist, daß die Verfilmungen der erfindungsgemäß zu verwendenden wäßrigen Polymerisatdispersionen nicht nur gegenüber Wasserdampf eine erhöhte Sperrwirkung aufweisen, sondern auch gegenüber Wasser im flüssigen Aggregatzustand eine erhöhte abweisende Wirkung zeigen. Dies gewährleistet auch bei rückseitiger Durchfeuchtung eine bleibende Haftung und verhindert Blasen- und Rißbildung. Demgemäß eignen sich die erfindungsgemäß zu verwendenden wäßrigen Polymerisatdispersionen auch als Bindemittel für Dichtungsmassen. Mit besonderem Vorteil werden sie um in Wände angebrachte Installationen herum angewendet, um diese Nahtstellen sowohl gegenüber Wasserdampf als auch Kondenswasser abzudichten. In der Regel wird diesbezüglich zunächst eine Grundbeschichtung aufgebracht in die meist ein Gewebe (z.B. ein Glasfasergewebe) eingelegt wird. Danach wird eine Endbeschichtung aufgebracht.

Wie bereits erwähnt, können die erfindungsgemäß zu verwendenden wäßrigen Polymerisatdispersionen bereits für sich als wasserdampfabsperrende Beschichtung (Grundierung oder Abschlußschicht) aufgebracht werden. Meist werden sie jedoch mit feinteiligen anorganischen Pigmenten versetzt angewendet. Diesbezüglich ist es von Vorteil, daß die erfindungsgemäß zu verwendenden wäßrigen Polymerisatdispersionen auch ein erhöhtes Pigmentbindevermögen aufweisen. Typische Pigmentvolumenkonzentrationen liegen bei bis zu 60, in der Regel 10 bis 60, häufig 10 bis 55, meist 20 bis 45 Vol.-%. Die pigmentierten Systeme eignen sich insbesondere auch als Dichtungsmassen.

Als feinteilige anorganische Pigmente kommen u.a. in Betracht Glimmer, Kaolin, Schwerspat, Talkum, Quarzsand, Quarzmehl, Kreide, Titandioxid, Dolomit, Barytmehl, hydrophobierte feinteilige Kieselsäure, Eisenoxid u.a. Buntpigmente. Gegebenenfalls können auch organische Pigmente zum Zweck der Einfärbung mitverwendet werden. Der Korngrößtdurchmesser solcher Pigmente beträgt meist 1 bis 100 µm. Da die anorganischen Pigmente in der Regel in wäßrigem Medium im wesentlichen unlöslich sind, können so erfindungsgemäß zu verwendende wäßrige Polymerisatzubereitungen erhalten werden, deren Gehalt an im wäßrigen Medium gelösten Alkalimetallionen, bezogen auf die Masse des enthaltenen dispergierten Polymerisats, ≤ 0,5 oder ≤ 0,4 oder ≤ 0,3 oder ≤ 0,2 oder ≤ 0,1 oder ≤ 0,05 oder vorzugsweise ≤ 0,01 bzw. 0 Gew.-% beträgt. Es ist erfindungsgemäß nicht von Nachteil, wenn entsprechende Gehaltsbeschränkungen bezüglich des Beiseins von Erdalkalimetallionen sowie sonstiger Metallionen eingehalten werden.

Neben Pigmenten enthalten als erfindungsgemäße Wasserdampfsperren aufzubringende erfindungsgemäße wäßrige Polymerisatzubereitungen meist noch Entschäumer, Verdicker, Pigmentverteiler und Konservierungsmittel zugesetzt. In der Regel beträgt die Gesamtmenge dieser Hilfsmittel, einschließlich der Dispergiermittel der Wäßrigen Polymerisatgrunddispersion, ≤ 10, bevorzugt ≤ 5 Gew.-%, bezogen auf die Gesamtmasse der wäßrigen Zubereitung. Vorzugsweise weisen auch diese Hilfsmittel keine in Wasser löslichen Alkalimetallionen bzw. wasserlöslichen Metallionen überhaupt auf. In typischer Weise werden die erfindungsgemäßen wasserdampfsperren in Trockenschichtdicken von bis zu 2 mm, gegebenenfalls auch mehr, aufgebracht. Abschließend bleibt festzuhalten, daß die erfindungsgemäßen Wasserdampfsperren auch auf alkalischen Untergründen Langzeitwirksamkeit zeigen, so daß z.B. Hydrolysereaktionen nachfolgend aufgetragener Klebstoffe vermindert oder vermieden werden können.

In der Regel liegt die Wasserdampfdiffusionswiderstandszahl $S_d$/S (vgl. Ausführungsbeispiele) der erfindungsgemäßen Wasserdampfsperren bei Werten ≥ 10000. Gleichzeitig sind Reißdehnungen von ≥ 200 % sowie eine Reißkraft ≥ 1,5 N/$mm^2$ möglich (bezogen auf trocken gelagerte Wasserdampfsperren).

Geeignete Substrate für Beschichtungen mit erfindungsgemäßen wässrigen Polymerisatdispersionen oder -zubereitungen sind beispielsweise Beton, Gips, Gipskarton, Preßholz, Sperrholz, Hartfasern, Holz, Zementmörtel, Mauerwerk oder Zement sowie Innenwände von Feuchträumen und Außenwände von Kühlräumen.

Abschließend seien als weitere mögliche Verwendungen der erfindungsgemäßen wäßrigen Polymerisatdispersionen bzw. -zubereitungen festgehalten: die Verwendung als Grundierung (insbesondere von mineralischen Untergründen wie Zementmörtel oder Gipskarton), die Verwendung als Kronenkorkenabdichtung (can sealant), die Verwendung als Additiv zur Modifizierung von Zementmörtel, die Verwendung zur Beschichtung von Beton zum Schutz desselben vor Austrocknung während des Abbindens, sowie die Verwendung als Bindemittel für Korrosionsschutzanstriche (Schutz vor Wasser).

Beispiel

a) Herstellung einer erfindungsgemäß zu verwendenden wäßrigen Polymerisatdispersion ED

In einem mit einem Ankerrührer ausgestatteten 160 1-Stahlreaktor wurden vorgelegt:

| | |
|---|---|
| 15000 g | Wasser, |
| 1120 g | eines feinteiligen wäßrigen Polystyrolsaatlatex ($\bar{d}_n$ = 30 nm, Feststoffgehalt = 33 Gew.-%, enthaltend als Dispergiermittel 20 Gew.-%, bezogen auf die Masse an Polystyrol, des Na-Salzes von Dodecylbenzolsulfonat), |
| 53 g | Natriumperoxodisulfat |
| 5300 g | einer 5 gew.-%igen wäßrigen Itaconsäurelösung und |
| 27 g | des Dinatriumsalzes von Ethylendiamintetraessigsäure. |

Die Vorlage wurde 3 mal mit Stickstoff abgepreßt und unter Rühren auf die Polymerisationstemperatur von 80°C erwärmt, die während der Polymerisation aufrechterhalten wurde. Bei Erreichen einer Kesselinnentemperatur von 70°C wurde damit begonnen als Zulauf 1 eine Monomerenemulsion aus

| | |
|---|---|
| 16300 g | Wasser, |
| 23300 g | Butadien, |
| 28600 g | Styrol |
| 530 g | Acrylsäure, |
| 265 g | Acrylamid und |
| 1700 g | einer 28 gew.-%igen wäßrigen Lösung des Na-Salzes des alpha-Sulfo-omega (Dodecyloxy)poly(oxyethylens) mit einer mittleren EO-Kettenlänge von 2-3 Einheiten und |
| 770 g | tert.-Dodecylmercaptan |

dem Polymerisationskessel innerhalb von 5,5 h kontinuierlich zuzudosieren. Zeitgleich beginnend mit dem Zulauf 1 wurde innerhalb von 6 h als Zulauf 2 eine Lösung von 160 g Natriumperoxodisulfat in 6000 g Wasser dem Polymerisationskessel kontinuierlich zugeführt.

Nach beendeter Zufuhr von Zulauf 2 wurde das Polymerisationsgemisch noch 2 Stunden unter Rühren bei 80°C gehalten. Danach wurden unter Aufrechterhaltung der 80°C innerhalb von 2 h eine Lösung 1 aus 105 g tert.-Butylhydroperoxid in 1250 g Wasser und eine Lösung 2 aus 1260 g Wasser, 111 g Natriumdisulfit und 69 g Aceton synchron kontinuierlich in den Polymerisationskessel dosiert (chemische Desodorierung). Anschließend wurde der pH-Wert des wäßrigen Dispergiermediums durch Zusatz einer 25 gew.-%igen wäßrigen Ammoniaklösung ins alkalische verschoben und danach durch Durchleiten von Wasserdampf physikalisch desodoriert.

Erhalten wurde eine erfindungsgemäß zu verwendende wäßrige Polymerisatdispersion, deren Feststoffgehalt 53,1 Gew.-% betrug, deren dispergierte Polymerisatteilchen ein $\bar{d}_z$ von 162 nm aufwiesen, deren Dispergiermedium einen pH-Wert von 8,3 zeigte und deren Restgehalt an flüchtigen organischen Bestandteilen unterhalb von 100 ppm lag. Das dispergierte Polymerisat wies nachfolgende Monomerenzusammensetzung auf:

| | |
|---|---|
| 54,3 Gew.-% | Styrol, |
| 43,7 Gew.% | Butadien, |
| 1,0 Gew.-% | Acrylsäure, |
| 0,5 Gew.-% | Itaconsäure und |

0,5 Gew.-% Acrylamid

Die Glasübergangstemperatur ihrer Verfilmungen lag bei -3°C. Bezogen auf die Menge an dispergiertem Polymerisat wies die wäßrige Polymerisatdispersion ED einen Alkalimetallgehalt von 0,14 Gew.-% und einen Dispergiermittelgesamtgehalt von 1 Gew.-% auf.

b) Polymerisatvergleichsdispersionen VD1 bis VD7

VD1: Wie ED, die pH-Erhöhung wurde jedoch nicht mit Ammoniak sondern mit Natriumhydroxid durchgeführt. Die resultierende wäßrige Polymerisatdispersion VD1 wies einen Alkalimetallgehalt von 0,99 Gew.-%, bezogen auf dispergiertes Polymerisat, auf.

VD2: Wie ED, die Styrolmenge in Zulauf 1 betrug jedoch 39190 g und die Butadienmenge desselben Zulauf lag bei 12710 g.

VD3: Wie ED, die Styrolmenge in Zulauf 1 betrug jedoch 5300 g und die Butadienmenge derselben Zulauf lag bei 46600 g.

VD4: Eine wäßrige Polymerisatdispersion, deren dispergiertes Polymerisat nachfolgende Monomerenzusammensetzung aufwies:

50 Gew.-% n-Butylacrylat,
46 Gew.-% Styrol,
1,5 Gew.-% Acrylamid und
2,5 Gew.-% Acrylsäure.

Ihr GA-Wert betrug 0,15 Gew.-% und der pH-Wert des wäßrigen Dispergiermediums war mit Ammoniak auf 8,3 eingestellt worden. $\bar{d}_z$ betrug 156 nm und der Feststoffgehalt betrug 53 Gew.-%. Die Glasübergangstemperatur ihrer Verfilmungen lag bei +12°C.

VD5: Wie VD4, die Monomerenzusammensetzung lautete jedoch:

51 Gew.-% Styrol,
45 Gew.-% 2-Ethylhexylacrylat,
3 Gew.-% Acrylsäure und
1 Gew.% Acrylamid.

Der GA-Wert betrug 0,20 Gew.-%, $\bar{d}_z$ belief sich auf 172 nm. Die Glasübergangstemperatur ihrer Verfilmungen lag bei +6°C.

VD6: Wie VD4, die Monomerenzusammensetzung lautete jedoch:

51 Gew.-% 2-Ethylhexylacrylat,
47 Gew.-% Methylmethacrylat,
0,25Gew.-% Butandioldiacrylat und
1,75Gew.-% Acrylsäure.

Der GA-Wert betrug 0,21 Gew.-%, $\bar{d}_z$ betrug 175 nm und die Glasübergangstemperatur ihrer Verfilmungen lag bei -5°C.

VD7: Diofan A 601.

c) Formulierung von wäßrigen Polymerisatzubereitungen aus den wäßrigen Polymerisatdispersionen ED und VD1 bis VD7, die sich als Wasserdampfsperren eignen.

Formulierungsrezeptur:

465 g wäßrige Polymerisatdispersion,
7 g Byk®-035 (Entschäumer der Fa. BYK-Chemie GmbH, Wesel, DE),
2 g Konservierungsmittel,
3 g Pigmentverteiler N, 30 gew.-%ig (der Fa. BASF AG, Ludwigshafen, DE),
3 g Lanco®-Gel CP 15 (Hydroxypropylgalactomanan-Verdicker der Fa. Langer & Co. GmbH, Ritterhude, DE),
5 g Kronos® 2056 (feinteiliges $TiO_2$ (Rutil) der Kronos Titan-GmbH, Leverkusen, DE),
3 g Eisenoxidschwarz,
136 g Barythmehl/N (Korngrößtdurchmesser 40 µm, Fa. Sachtleben GmbH, Duisburg, DE),
364 g Microdol® 1 (Gemisch aus feinteiligem $CaCO_3$ und $MgCO_3$, Korngrößtdurchmesser 5 bis 10 µm, Fa. Norwegian Talk Deutschland GmbH, Bad Soden-Salmünster, DE),
6 g Byk-035
6 g Collacral® PU, 75,5 gew.-%ig (Assoziativverdicker auf Polyurethanbasis der BASF AG, Ludwigshafen, DE).

Die Pigmentvolumenkonzentration der resultierenden Formulierungen lag bei ca. 40 Vol.-%. Ihr Feststoffgehalt betrug ca. 77 Gew.-% (die Qualität der Formulierung läßt sich im erfindungsgemäßen Sinn noch verbessern, wenn anstelle von Pigmentverteiler N eine entsprechende Menge an Pigmentverteiler A der Fa. BASF AG eingesetzt wird).

d) Bestimmung der anwendungstechnischen Eigenschaften von Verfilmungen der Formulierungen aus c)

1. Bestimmung von Reißkraft RK [$N/mm^2$] und Reißdehnung RD [%] in Anwendung einer Abzugsgeschwindigkeit von 200 mm/ min nach DIN 53 504 (8 Tage Trockenlagerung sowie 8 Tage Trockenlagerung und anschließend 3 Tage Naßlagerung); 23°C;

2. Bestimmung der Wasserdampfdurchlässigkeit Wdd [$g/m^2$ Tag] nach DIN 52 615 (Trockenschichtdicke 0,6 mm) bei einem Feuchtegefälle von 50 % zu 93 % relativer Luftfeuchtigkeit und 23°C;

3. Bestimmung der Wasseraufnahme Wa [Gew.-%] nach 48 h und nach 96 h; 23°C.

Die erhaltenen Ergebnisse zeigt die nachfolgende Tabelle.

Tabelle

| Polymerisat-dispersion | RK | | RD | | Wdd | Wa | | $S_d$ |
|---|---|---|---|---|---|---|---|---|
| | trocken | naß | trocken | naß | | 48 | 96 | |
| ED | 1,93 | 1,13 | 268 | 568 | 1,9 | 3,5 | 5 | 9,9 |
| VD1 | 2,04 | 1,13 | 251 | 508 | 10,2 | 14,8 | 15,8 | 1,9 |
| VD2 | die Formulierung bildete keinen zusammenhängenden Film | | | | | | | |
| VD3 | 0,54 | 0,32 | 53 | 123 | 1,8 | 3,8 | 4,7 | 10,8 |
| VD4 | - | - | - | - | 31,2 | - | - | 0,6 |
| VD5 | - | - | - | - | 16,6 | - | - | 1,2 |
| VD6 | - | - | - | - | 35,2 | - | - | 0,6 |
| VD7 | - | - | - | - | 2 | - | - | 11 |
| (die Formulierung erwies sich als nicht lagerstabil) | | | | | | | | |

Aus dem Wdd-Wert läßt sich die diffusionsäquivalente Luftschichtdicke $S_d$ [m] errechnen. Sie gibt an, wie dick eine ruhende Luftschicht sein muß, um den gleichen Wasserdampfdiffusionsdurchlaßwiderstand wie eine Verfilmung der Dicke S zu haben. Die wasserdampfdiffusionswiderstandszahl, die eine Materialkonstante darstellt, ergibt sich als $S_d/S$. Sie beträgt für die Formulierung unter Verwendung von ED 17333.

**Patentansprüche**

1. Wäßrige Polymerisatdispersion, deren in disperser Verteilung befindliches Polymerisat in radikalisch polymerisierter Form aus

| | |
|---|---|
| 20 bis 65 Gew.-% | wenigstens eines vinylaromatischen Monomeren (Monomere A), |
| 35 bis 80 Gew.-% | wenigstens eines zwei konjugierte ethylenisch ungesättigte Doppelbindungen aufweisenden Monomeren (Monomere B) und |
| 0,5 bis 10 Gew.-% | sonstigen Monomeren, ausgewählt aus der Gruppe umfassend 3 bis 6 C-Atome aufweisende $\alpha,\beta$-monoethylenisch ungesättigte Mono- und Dicarbonsäuren und deren Amide (Monomere C) |

aufgebaut ist und deren Gehalt GA an Alkalimetallionen, bezogen auf die Masse des dispergierten Polymerisats, $\leq$0,5 Gew.-% beträgt.

2. Wäßrige Polymerisatdispersion nach Anspruch 1, wobei die Monomeren A aus Styrol und/oder Vinyltoluol bestehen.

3. Wäßrige Polymerisatdispersion nach Anspruch 1, wobei Styrol alleiniges Monomeres A ist.

4. Wäßrige Polymerisatdispersion nach einem der Ansprüche 1 bis 3, wobei die Monomeren B aus Butadien und/oder Isopren bestehen.

5. Wäßrige Polymerisatdispersion nach einem der Ansprüche 1 bis 4, wobei Butadien alleiniges Monomeres B ist.

6. Wäßrige Polymerisatdispersion nach einem der Ansprüche 1 bis 5, deren in disperser Verteilung befindliches Polymerisat in radikalisch polymerisierter Form aus

| | |
|---|---|
| 40 bis 60 Gew.-% | Monomeren A, |
| 40 bis 60 Gew.-% | Monomeren B und |
| 0,5 bis 10 Gew.-% | Monomeren C |

aufgebaut ist.

7. Wäßrige Polymerisatdispersion nach einem der Ansprüche 1 bis 5, deren in disperser Verteilung befindliches Polymerisat in radikalisch polymerisierter Form aus

| | |
|---|---|
| 50 bis 60 Gew.-% | Monomeren A, |
| 40 bis 50 Gew.-% | Monomeren B und |
| 0,5 bis 10 Gew.-% | Monomeren C |

aufgebaut ist.

8. Wäßrige Polymerisatdispersion nach einem der Ansprüche 1 bis 7, deren in disperser Verteilung befindliches Polymerisat zu 0,5 bis 5 Gew.-% aus Monomeren C in einpolymerisierter Form aufgebaut ist.

9. Wäßrige Polymerisatdispersion nach einem der Ansprüche 1 bis 8, wobei die Monomeren C ausgewählt sind aus der Gruppe umfassend Acrylsäure, Methacrylsäure, Itaconsäure, Acrylamid und Methacrylamid.

10. Wäßrige Polymerisatdispersion nach einem der Ansprüche 1 bis 8, wobei die Monomeren C ein Gemisch aus wenigstens einer 3 bis 6 C-Atome aufweisenden und eine oder zwei Carboxylgruppen umfassenden $\alpha,\beta$-monoethylenisch ungesättigten Carbonsäure und wenigstens einem Amid dieser Carbonsäuren sind.

11. Wäßrige Polymerisatdispersion nach einem der Ansprüche 1 bis 10, deren z-mittlerer Polymerisatteilchendurchmesser $\geq$ 100 bis $\leq$ 250 nm beträgt.

12. Wäßrige Polymerisatdispersion nach einem der Ansprüche 1 bis 10, deren z-mittlerer Polymerisatteilchendurchmesser $\geq$ 140 bis $\leq$ 200 nm beträgt.

**13.** Wäßrige Polymerisatdispersion nach einem der Ansprüche 1 bis 12, deren wäßriges Dispergiermedium einen pH-Wert ≥ 6 aufweist.

**14.** Wäßrige Polymerisatdispersion nach einem der Ansprüche 1 bis 12, deren wäßriges Dispergiermedium einen pH-Wert von 7 bis 10 aufweist.

**15.** Wäßrige Polymerisatdispersion nach einem der Ansprüche 1 bis 13, wobei GA ≤ 0,4 Gew.-% beträgt.

**16.** Wäßrige Polymerisatdispersion nach einem der Ansprüche 1 bis 13, wobei GA ≤ 0,3 Gew.-% beträgt

**17.** Wäßrige Polymerisatdispersion nach einem der Ansprüche 1 bis 13, wobei GA ≤ 0,2 Gew.-% beträgt.

**18.** Wäßrige Polymerisatdispersion nach einem der Ansprüche 1 bis 13, wobei GA ≤ 0,1 Gew.-% beträgt.

**19.** Wäßrige Polymerisatdispersion nach einem der Ansprüche 1 bis 13, wobei GA ≤ 0,05 Gew.-% beträgt.

**20.** Wäßrige Polymerisatdispersion nach einem der Ansprüche 1 bis 13, wobei die Polymerisatdispersion kein Alkalimetall enthält.

**21.** Wäßrige Polymerisatdispersion nach einem der Ansprüche 1 bis 20, deren dispergiertes Polymerisat eine Glasübergangstemperatur von -30 bis +15°C aufweist.

**22.** Wäßrige Polymerisatdispersion nach einem der Ansprüche 1 bis 21, deren dispergiertes Polymerisat eine Glasübergangstemperatur von -10 bis +5°C aufweist.

**23.** Wäßrige Polymerisatdispersion nach einem der Ansprüche 1 bis 22, deren Feststoffgehalt 40 bis 70 Gew.-% beträgt.

**24.** Wäßrige Polymerisatdispersion nach einem der Ansprüche 1 bis 22, deren Feststoffgehalt 50 bis 60 Gew.-% beträgt.

**25.** Wäßrige Polymerisatdispersion nach einem der Ansprüche 1 bis 24, deren Verfilmungen eine Wasserdampfdiffusionswiderstandszahl ≥ 10000, eine Reißkraft von ≥ 1,5 N/mm$^2$ und eine Reißdehnung ≥ 200 % aufweisen.

**26.** Wäßrige Polymerisatzubereitung, die eine wäßrige Polymerisatdispersion gemäß einem der Ansprüche 1 bis 25 sowie feinteilige Pigmente in einer Pigmentvolumenkonzentration von bis zu 60 Vol.-% enthält.

**27.** Wäßrige Polymerisatzubereitung, die eine wäßrige Polymerisatdispersion gemäß einem der Ansprüche 1 bis 25 sowie feinteilige Pigmente in einer Pigmentvolumenkonzentration von 20 bis 45 Vol.-% enthält.

**28.** Wäßrige Polymerisatzubereitung nach Anspruch 26 oder 27, deren Gehalt an im wäßrigen Medium gelösten Alkalimetallionen, bezogen auf die Masse des enthaltenen dispergierten Polymerisats, ≤ 0,5 Gew.-% beträgt.

**29.** Wäßrige Polymerisatzubereitung nach Anspruch 26 oder 27, deren Gehalt an im wäßrigen Medium gelösten Alkalimetallionen, bezogen auf die Masse des enthaltenen dispergierten Polymerisats, ≤ 0,3 Gew.-% beträgt.

**30.** Wäßrige Polymerisatzubereitung nach Anspruch 26 oder 27, deren Gehalt an im wäßrigen Medium gelösten Alkalimetallionen, bezogen auf die Masse des enthaltenen dispergierten Polymerisats, ≤ 0,2 Gew.-% beträgt.

**31.** Wäßrige Polymerisatzubereitung nach einem der Ansprüche 26 bis 30, deren Verfilmungen eine Wasserdampfdiffusionswiderstandszahl ≥ 10000, eine Reißkraft von ≥ 1,5 N/mm$^2$ und eine Reißdehnung ≥ 200 % aufweisen.

**32.** Verwendung einer wäßrigen Polymerisatdispersion gemäß einem der Ansprüche 1 bis 25 zur Erzeugung einer Wasserdampfsperre.

**33.** Verwendung einer wäßrigen Polymerisatzubereitung gemäß einem der Ansprüche 26 bis 31 zur Erzeugung einer Wasserdampfsperre.

**34.** Verwendung einer wäßrigen Polymerisatdispersion gemäß einem der Ansprüche 1 bis 25 zum Beschichten von Substraten.

**35.** Verwendung einer wäßrigen Polymerisatzubereitung gemäß einem der Ansprüche 26 bis 31 zum Beschichten von Substraten.

**36.** Verwendung nach Anspruch 34 oder 35, wobei das Substrat Beton, Gips, Gipskarton, Preßholz, Sperrholz, Hartfasern, Holz, Zementmörtel, Mauerwerk oder Zement ist.

**37.** Substrate, die mit einer Verfilmung einer wäßrigen Polymerisatdispersion gemäß einem der Ansprüche 1 bis 25 beschichtet sind.

**38.** Substrate, die mit einer Verfilmung einer wäßrigen Polymerisatzubereitung gemäß einem der Ansprüche 26 bis 31 beschichtet sind.

**39.** Verwendung einer wäßrigen Polymerisatdispersion gemäß einem der Ansprüche 1 bis 25 zum Beschichten der Innenwände von Feuchträumen.

**40.** Verwendung einer wäßrigen Polymerisatdispersion gemäß einem der Ansprüche 1 bis 25 zum Beschichten der Außenwände von Kühlräumen.

**41.** Verwendung einer wäßrigen Polymerisatzubereitung gemäß einem der Ansprüche 26 bis 31 zum Beschichten der Innenwände von Feuchträumen.

**42.** Verwendung einer wäßrigen Polymerisatzubereitung gemäß einem der Ansprüche 26 bis 31 zum Beschichten der Außenwände von Kühlräumen.

**43.** Verfahren zur Herstellung einer wäßrigen Polymerisatdispersion gemäß einem der Ansprüche 1 bis 25 durch radikalische wäßrige Emulsionspolymerisation der Ausgangsmonomeren A, B und C in dem gewünschten Polymerisataufbau entsprechenden Verhältnis, dadurch gekennzeichnet, daß man zur Erhöhung des pH-Wertes des wäßrigen Dispergiermediums Ammoniak und/oder ein organisches Amin zusetzt.

**44.** Verwendung einer wäßrigen Polymerisatzubereitung gemäß einem der Ansprüche 26 bis 31 als Dichtungsmasse.

## Claims

**1.** An aqueous polymer dispersion whose polymer, present in disperse distribution, is composed in free-radically polymerized form of

| | |
|---|---|
| from 20 to 65% by weight | of at least one vinylaromatic monomer (monomers A), |
| from 35 to 80% by weight | of at least one monomer having two conjugated, ethylenically unsaturated double bonds (monomers B), and |
| from 0.5 to 10% by weight | of other monomers selected from the group consisting of $\alpha,\beta$-monoethylenically unsaturated mono- and dicarboxylic acids and amides thereof, having 3 to 6 carbon atoms (monomers C) |

and whose content GA of alkali metal ions, based on the mass of the dispersed polymer, is ≤0.5% by weight.

**2.** A dispersion as claimed in claim 1, wherein the monomers A consist of styrene and/or vinyltoluene.

**3.** A dispersion as claimed in claim 1, wherein styrene is the sole monomer A.

**4.** A dispersion as claimed in any of claims 1 to 3, wherein the monomers B consist of butadiene and/or isoprene.

**5.** A dispersion as claimed in any of claims 1 to 4, wherein butadiene is the sole monomer B.

**6.** A dispersion as claimed in any of claims 1 to 5, whose polymer, present in disperse distribution, is composed in

free-radically polymerized form of

| | |
|---|---|
| from 40 to 60% by weight | of monomers A, |
| from 40 to 60% by weight | of monomers B and |
| from 0.5 to 10% by weight | of monomers C. |

**7.** A dispersion as claimed in any of claims 1 to 5, whose polymer, present in disperse distribution, is composed in free-radically polymerized form of

| | |
|---|---|
| from 50 to 60% by weight | of monomers A, |
| from 40 to 50% by weight | of monomers B and |
| from 0.5 to 10% by weight | of monomers C. |

**8.** A dispersion as claimed in any of claims 1 to 7, from 0.5 to 5% by weight of whose polymer, present in disperse distribution, is composed of monomers C in copolymerized form.

**9.** A dispersion as claimed in any of claims 1 to 8, wherein the monomers C are selected from the group consisting of acrylic acid, methacrylic acid, itaconic acid, acrylamide and methacrylamide.

**10.** A dispersion as claimed in any of claims 1 to 8, wherein the monomers C are a mixture of at least one $\alpha,\beta$-monoethylenically unsaturated carboxylic acid having 3 to 6 carbon atoms and comprising one or two carboxyl groups, and of at least one amide of these carboxylic acids.

**11.** A dispersion as claimed in any of claims 1 to 10, whose z-mean polymer particle diameter is from ≥ 100 to ≤ 250 nm.

**12.** A dispersion as claimed in any of claims 1 to 10, whose z-mean polymer particle diameter is from ≥ 140 to ≤ 200 nm.

**13.** A dispersion as claimed in any of claims 1 to 12, whose aqueous dispersion medium has a pH ≥ 6.

**14.** A dispersion as claimed in any of claims 1 to 12, whose aqueous dispersion medium has a pH from 7 to 10.

**15.** A dispersion as claimed in any of claims 1 to 13, wherein GA is ≤ 0.4% by weight.

**16.** A dispersion as claimed in any of claims 1 to 13, wherein GA is ≤ 0.3% by weight.

**17.** A dispersion as claimed in any of claims 1 to 13, wherein GA is ≤ 0.2% by weight.

**18.** A dispersion as claimed in any of claims 1 to 13, wherein GA is ≤ 0.1% by weight.

**19.** A dispersion as claimed in any of claims 1 to 13, wherein GA is ≤ 0.05% by weight.

**20.** A dispersion as claimed in any of claims 1 to 13, which contains no alkali metal.

**21.** A dispersion as claimed in any of claims 1 to 20, whose dispersed polymer has a glass transition temperature from -30 to +15°C.

**22.** A dispersion as claimed in any of claims 1 to 21, whose dispersed polymer has a glass transition temperature from -10 to +5°C.

**23.** A dispersion as claimed in any of claims 1 to 22, whose solids content is from 40 to 70% by weight.

**24.** A dispersion as claimed in any of claims 1 to 22, whose solids content is from 50 to 60% by weight.

**25.** A dispersion as claimed in any of claims 1 to 24, films of which have a water-vapor diffusion resistance index ≥ 10,000, a tear strength of ≥ 1.5 $N/mm^2$ and an elongation at break of ≥ 200%.

**26.** An aqueous polymer formulation which comprises an aqueous polymer dispersion as claimed in any of claims 1 to 25 and finely divided pigments in a pigment volume concentration of up to 60% by volume.

**27.** An aqueous polymer formulation which comprises an aqueous polymer dispersion as claimed in any of claims 1 to 25 and finely divided pigments in a pigment volume concentration of from 20 to 45% by volume.

**28.** A formulation as claimed in either claim 26 or 27, whose content of alkali metal ions dissolved in the aqueous medium, based on the mass of the dispersed polymer present, is ≤ 0.5% by weight.

**29.** A formulation as claimed in either claim 26.or 27, whose content of alkali metal ions dissolved in the aqueous medium, based on the mass of the dispersed polymer present, is ≤ 0.3% by weight.

**30.** A formulation as claimed in either claim 26 or 27, whose content of alkali metal ions dissolved in the aqueous medium, based on the mass of the dispersed polymer present, is ≤ 0.2% by weight.

**31.** A formulation as claimed in any of claims 26 to 30, films of which have a water-vapor diffusion resistance index ≥ 10,000, a tear strength of ≥ 1.5 $N/mm^2$ and an elongation at break of ≥ 200%.

**32.** The use of a dispersion as claimed in any of claims 1 to 25 for producing a water-vapor barrier.

**33.** The use of a formulation as claimed in any of claims 26 to 31 for producing a water vapor barrier.

**34.** The use of a dispersion as claimed in any of claims 1 to 25 for coating substrates.

**35.** The use of a formulation as claimed in any of claims 26 to 31 for coating substrates.

**36.** The use as claimed in either claim 34 or 35, wherein the substrate is concrete, plaster, plasterboard, compressed wood, plywood, fiberboard, wood, cement mortar, masonry or cement.

**37.** A substrate coated with a film of a dispersion as claimed in any of claims 1 to 25.

**38.** A substrate coated with a film of a formulation as claimed in any of claims 26 to 31.

**39.** The use of a dispersion as claimed in any of claims 1 to 25 for coating the interior walls of damp rooms.

**40.** The use of a dispersion as claimed in any of claims 1 to 25 for coating the exterior walls of refrigeration rooms.

**41.** The use of a formulation as claimed in any of claims 26 to 31 for coating the interior walls of damp rooms.

**42.** The use of a formulation as claimed in any of claims 26 to 31 for coating the exterior walls of refrigeration rooms.

**43.** A process for preparing a dispersion as claimed in any of claims 1 to 25 by free-radical aqueous emulsion polymerization of the starting monomers A, B and C in a ratio corresponding to the desired polymer structure, which comprises adding ammonia and/or an organic amine in order to increase the pH of the aqueous dispersion medium.

**44.** The use of a formulation as claimed in any of claims 26 to 31 as a sealing compound.

**Revendications**

**1.** Dispersion aqueuse de polymère, dont le polymère se trouvant dans la dispersion sous forme polymérisée par voie radicalaire est constitué de

20 à 65% en poids d'au moins un monomère vinylaromatique (monomère A),
35 à 80% en poids d'au moins un monomère comportant deux doubles liaisons conjuguées à insaturation éthylénique (monomère B) et
0,5 à 10% en poids d'autres monomères, choisis dans le groupe comprenant les acides mono- et dicarboxyliques à insaturation mono-éthylénique en $\alpha,\beta$ comportant 3 à 6 atomes de C et leurs amides (monomère C)

et leur teneur GA en ions de métal alcalin est ≤ 0,5% en poids par rapport à la masse du polymère dispersé.

2. Dispersion aqueuse de polymère selon la revendication 1, dans laquelle les monomères A sont constitués par le styrène et/ou le vinyltoluène.

3. Dispersion aqueuse de polymère selon la revendication 1, dans laquelle le styrène constitue le monomère A seul.

4. Dispersion aqueuse de polymère selon l'une quelconque des revendications 1 à 3, dans laquelle les monomères B sont constitués par le butadiène et/ou l'isoprène.

5. Dispersion aqueuse de polymère selon l'une quelconque des revendications 1 à 4, dans laquelle le butadiène constitue seul le monomère B.

6. Dispersion aqueuse de polymère selon l'une quelconque des revendications 1 à 5, dont le polymère se trouvant dans la dispersion sous forme polymérisée par voie radicalaire est constitué de

    40 à 60% en poids de monomère A
    40 à 60% en poids de monomère B et
    0,5 à 10% en poids de monomère C.

7. Dispersion aqueuse de polymère selon l'une quelconque des revendications 1 à 5, dont le polymère se trouvant dans la dispersion sous forme polymérisée par voie radicalaire est constitué de

    50 à 60% en poids de monomère A,
    40 à 50% en poids de monomère B et
    0,5 à 10% en poids de monomère C.

8. Dispersion aqueuse de polymère selon l'une quelconque des revendications 1 à 7, dont le polymère se trouvant dans la dispersion est constitué à raison de 0,5 à 5% en poids de monomères C sous forme polymérisée.

9. Dispersion aqueuse de polymère selon l'une quelconque des revendications 1 à 8, dans laquelle les monomères C sont choisis dans le groupe comprenant l'acide acrylique, l'acide méthacrylique, l'acide itaconique, l'acrylamide et le méthacrylamide.

10. Dispersion aqueuse de polymère selon l'une quelconque des revendications 1 à 8, dans laquelle les monomères C constituent un mélange formé d'au moins un acide carboxylique à insaturation mono-éthylénique en $\alpha,\beta$ comportant 3 à 6 atomes de carbone et comprenant 1 ou 2 groupes carboxyles et au moins d'un amide de ces acides carboxyliques.

11. Dispersion aqueuse de polymère selon l'une quelconque des revendications 1 à 10, dont le diamètre moyen en nombre de particule de polymère est $\geq$ 100 nm et $\leq$ 250 nm.

12. Dispersion aqueuse de polymère selon l'une quelconque des revendications 1 à 10, dont le diamètre moyen en nombre de particule de polymère est $\geq$ 140 nm et $\leq$ 200 nm.

13. Dispersion aqueuse de polymère selon l'une quelconque des revendications 1 à 12, dont le milieu de dispersion aqueux présente une valeur de pH $\geq$ 6.

14. Dispersion aqueuse de polymère selon l'une quelconque des revendications 1 à 12, dont le milieu de dispersion aqueux présente une valeur de pH de 7 à 10.

15. Dispersion aqueuse de polymère selon l'une quelconque des revendications 1 à 13, dans laquelle GA est $\leq$ 0,4% en poids.

16. Dispersion aqueuse de polymère selon l'une quelconque des revendications 1 à 13, dans laquelle GA est $\leq$ 0,3% en poids.

17. Dispersion aqueuse de polymère selon l'une quelconque des revendications 1 à 13, dans laquelle GA est $\leq$ 0,2% en poids.

**18.** Dispersion aqueuse de polymère selon l'une quelconque des revendications 1 à 13, dans laquelle GA est ≤ 0,1% en poids.

**19.** Dispersion aqueuse de polymère selon l'une quelconque des revendications 1 à 13, dans laquelle GA est ≤ 0,05% en poids.

**20.** Dispersion aqueuse de polymère selon l'une quelconque des revendications 1 à 13, dans laquelle la dispersion de polymère ne contient aucun métal alcalin.

**21.** Dispersion aqueuse de polymère selon l'une quelconque des revendications 1 à 20, dont le polymère dispersé présente une température de transition vitreuse de -30°C à +15°C.

**22.** Dispersion aqueuse de polymère selon l'une quelconque des revendications 1 à 21, dont le polymère dispersé présente une température de transition vitreuse de -10°C à +5°C.

**23.** Dispersion aqueuse de polymère selon l'une quelconque des revendications 1 à 22, dont la teneur en solides est de 40% à 70% en poids.

**24.** Dispersion aqueuse de polymère selon l'une quelconque des revendications 1 à 22, dont la teneur en solides est de 50% à 60% en poids.

**25.** Dispersion aqueuse de polymère selon l'une quelconque des revendications 1 à 24, dont les films présentent un indice de résistance à la diffusion de vapeur d'eau ≥ 10 000, une résistance à la rupture ≥ 1,5 N/mm$^2$ et un allongement à la rupture ≥ 200%.

**26.** Préparation aqueuse de polymère, qui contient une dispersion aqueuse de polymère selon l'une quelconque des revendications 1 à 25 ainsi que des pigments finement divisés en une concentration volumique de pigments allant jusqu'à 60% en volume.

**27.** Préparation aqueuse de polymère, qui contient une dispersion aqueuse de polymère selon l'une quelconque des revendications 1 à 25 ainsi que des pigments finement divisés en une concentration volumique de pigments de 20 à 45% en volume.

**28.** Préparation aqueuse de polymère selon la revendication 26 ou 27, dont la teneur en ions de métal alcalin dissous dans le milieu aqueux est ≤ 0,5% en poids par rapport à la masse du polymère dispersé contenu.

**29.** Préparation aqueuse de polymère selon la revendication 26 ou 27, dont la teneur en ions de métal alcalin dissous dans le milieu aqueux est ≤ 0,3% en poids par rapport à la masse du polymère dispersé contenu.

**30.** Préparation aqueuse de polymère selon la revendication 26 ou 27, dont la teneur en ions de métal alcalin dissous dans le milieu aqueux est ≤ 0,2% en poids par rapport à la masse du polymère dispersé contenu.

**31.** Préparation aqueuse de polymère selon l'une quelconque des revendications 26 à 30, dont les films présentent un indice de résistance à la diffusion de vapeur d'eau ≥ 10 000, une résistance à la rupture ≥ 1,5 N/mm$^2$ et un allongement à la rupture ≥ 200%.

**32.** Utilisation d'une dispersion aqueuse de polymère selon l'une quelconque des revendications 1 à 25 pour produire une barrière à la vapeur d'eau.

**33.** Utilisation d'une préparation aqueuse de polymère selon l'une quelconque des revendications 26 à 31 pour produire une barrière à la vapeur d'eau.

**34.** Utilisation d'une dispersion aqueuse de polymère selon l'une quelconque des revendications 1 à 25 pour revêtir des substrats.

**35.** Utilisation d'une préparation aqueuse de polymère selon l'une quelconque des revendications 26 à 31 pour revêtir des substrats.

36. Utilisation selon la revendication 34 ou 35, dans laquelle le substrat est le béton, le plâtre, le placoplâtre, le bois aggloméré, le contreplaqué, les fibres dures, le bois, le mortier de ciment, la maçonnerie ou le ciment.

37. Substrats qui sont revêtus d'un film d'une dispersion aqueuse de polymère selon l'une quelconque des revendications 1 à 25.

38. Substrats qui sont revêtus d'un film d'une préparation aqueuse de polymère selon l'une quelconque des revendications 26 à 31.

39. Utilisation d'une dispersion aqueuse de polymère selon l'une quelconque des revendications 1 à 25 pour revêtir les parois intérieures de chambres humides.

40. Utilisation d'une dispersion aqueuse de polymère selon l'une quelconque des revendications 1 à 25 pour revêtir les parois extérieures de chambres froides.

41. Utilisation d'une préparation aqueuse de polymère selon l'une quelconque des revendications 26 à 31 pour revêtir les parois intérieures de chambres humides.

42. Utilisation d'une préparation aqueuse de polymère selon l'une quelconque des revendications 26 à 31 pour revêtir les parois extérieures de chambres froides.

43. Procédé de préparation d'une dispersion aqueuse de polymère selon l'une quelconque des revendications 1 à 25 au moyen d'une polymérisation par voie radicalaire en émulsion aqueuse des monomères de départ A, B et C dans le rapport correspondant à la structure souhaitée du polymère, caractérisé en ce que, l'on ajoute de l'ammoniac et/ou une amine organique pour augmenter la valeur du pH du milieu aqueux de dispersion.

44. Utilisation d'une préparation aqueuse de polymère selon l'une quelconque des revendications 26 à 31 comme masse d'étanchéité.